# EUROPEAN PATENT APPLICATION

(11) **EP 4 583 028 A1**
(43) Date of publication of application: **09.07.2025**
(21) Application number: 23859155.6
(22) Date of filing: 16.08.2023
(51) Int. Cl.: G06Q 20/04

(54) **SERVICE PROCESSING METHOD AND APPARATUS**

(30) Priority: 02.09.2022 CN 202211072003
(71) Applicant: Alipay (Hangzhou) Information Technology Co., Ltd., Hangzhou, Zhejiang 310000 (CN)
(72) Inventor: SHI, Xiangjian, Hangzhou, Zhejiang 310000 (CN)
(74) Representative: Finnegan Europe LLP
(86) International application number: PCT/CN2023/113242
(87) International publication number: WO 2024/046121

(57) **Abstract**

Embodiments of this specification provide service processing methods and apparatuses. The service processing method includes generating a service code creation request including service access information and a user identity identifier based on an access instruction of a user for a target service, and sending the service code creation request to a service platform based on the access instruction; performing service code rendering based on service code information returned after the service platform performs service code creation, and sending a rendered service code corresponding to the access instruction to the user; performing payment processing based on a payment request submitted after a merchant terminal scans the service code, and reading invoice application information associated with a service code identifier included in the payment request after payment succeeds; and delivering the invoice application information to the merchant terminal to perform invoice issuance.

## Description

### TECHNICAL FIELD

This specification relates to the field of data processing technologies, and in particular, to service processing methods and apparatuses.

### BACKGROUND

With the development of Internet technologies, electronic invoices have been widely used. Like ordinary paper invoices, the electronic invoices have codes issued by tax authorities, and therefore, have the same voucher effect as the ordinary paper invoices. However, the electronic invoices are more convenient than the ordinary paper invoices in various aspects such as invoice issuance and reimbursement. In a process of using invoices to reimburse for expenses, it is necessary to first fill out electronic forms such as a reimbursement application form, and then submit the filled reimbursement application form to a reviewer for review. The invoices are reimbursed for after the review is passed.

### SUMMARY

One or more embodiments of this specification provide a service processing method. The service processing method includes: based on an access instruction of a user for a target service, generating a service code creation request including service access information and a user identity identifier and sending the service code creation request to a service platform; performing service code rendering based on service code information returned after the service platform performs service code creation, and sending a rendered service code corresponding to the access instruction to the user; performing payment processing based on a payment request submitted after a merchant terminal scans the service code, and reading invoice application information associated with a service code identifier included in the payment request after payment succeeds; and delivering the invoice application information to the merchant terminal to perform invoice issuance.

One or more embodiments of this specification provide a service processing apparatus, including: a request generation module, configured to, based on an access instruction of a user for a target service, generate a service code creation request including service access information and a user identity identifier and send the service code creation request to a service platform; a service code rendering module, configured to perform service code rendering based on service code information returned after the service platform performs service code creation, and send a rendered service code corresponding to the access instruction to the user; a payment processing module, configured to perform payment processing based on a payment request submitted after a merchant terminal scans the service code, and read invoice application information associated with a service code identifier included in the payment request after payment succeeds; and an information delivery module, configured to deliver the invoice application information to the merchant terminal to perform invoice issuance.

One or more embodiments of this specification provide a service processing device, including a processor and a memory configured to store computer-executable instructions. When the computer-executable instructions are executed, the processor is enabled to: based on an access instruction of a user for a target service, generate a service code creation request including service access information and a user identity identifier and send the service code creation request to a service platform; perform service code rendering based on service code information returned after the service platform performs service code creation, and send a rendered service code corresponding to the access instruction to the user; perform payment processing based on a payment request submitted after a merchant terminal scans the service code, and read invoice application information associated with a service code identifier included in the payment request after payment succeeds; and deliver the invoice application information to the merchant terminal to perform invoice issuance.

One or more embodiments of this specification provide a storage medium, configured to store computer-executable instructions. When the computer-executable instructions are executed by a processor, the following procedure is implemented: based on an access instruction of a user for a target service, generating a service code creation request including service access information and a user identity identifier and sending the service code creation request to a service platform; performing service code rendering based on service code information returned after the service platform performs service code creation, and sending a rendered service code corresponding to the access instruction to the user; performing payment processing based on a payment request submitted after a merchant terminal scans the service code, and reading invoice application information associated with a service code identifier included in the payment request after payment succeeds; and delivering the invoice application information to the merchant terminal to perform invoice issuance.

### BRIEF DESCRIPTION OF DRAWINGS

FIG. 1 is a processing flowchart illustrating a service processing method, according to one or more embodiments of this specification;
FIG. 2 is a schematic diagram illustrating an association relationship, according to one or more embodiments of this specification;
FIG. 3 is a processing flowchart illustrating an invoice application information generation process, according to one or more embodiments of this specification;
FIG. 4 is a processing flowchart illustrating a service processing method applied to a user code scenario, according to one or more embodiments of this specification;
FIG. 5 is a processing flowchart illustrating a service processing method applied to an institution code scenario, according to one or more embodiments of this specification;
FIG. 6 is a processing flowchart illustrating another service processing method, according to one or more embodiments of this specification;
FIG. 7 is a schematic diagram illustrating a service processing apparatus, according to one or more embodiments of this specification; and
FIG. 8 is a schematic structural diagram illustrating a service processing device, according to one or more embodiments of this specification.

### DETAILED DESCRIPTION OF EMBODIMENTS

Embodiments of a service processing method provided in this specification are as follows: If an access instruction of a user for a target service is detected, service code creation is performed based on service access information and a user identity identifier. An obtained service code corresponding to the access instruction is sent to the user to present the service code to a merchant. Payment processing is performed based on a payment request submitted after a merchant terminal scans the service code, and invoice application information associated with a service code identifier of the service code is read after payment succeeds. The invoice application information is delivered to the merchant terminal to perform invoice issuance. As such, payment processing is completed and the invoice application information is read while the merchant terminal scans the service code presented by the user, so that the merchant can implement an integral service of payment and invoice issuance only by scanning the code once while accuracy of invoice issuance is improved. In addition, in each access process, a service code corresponding to current access is created, to ensure security of the service code in a payment process and reduce resource loss caused by leakage of the service code.

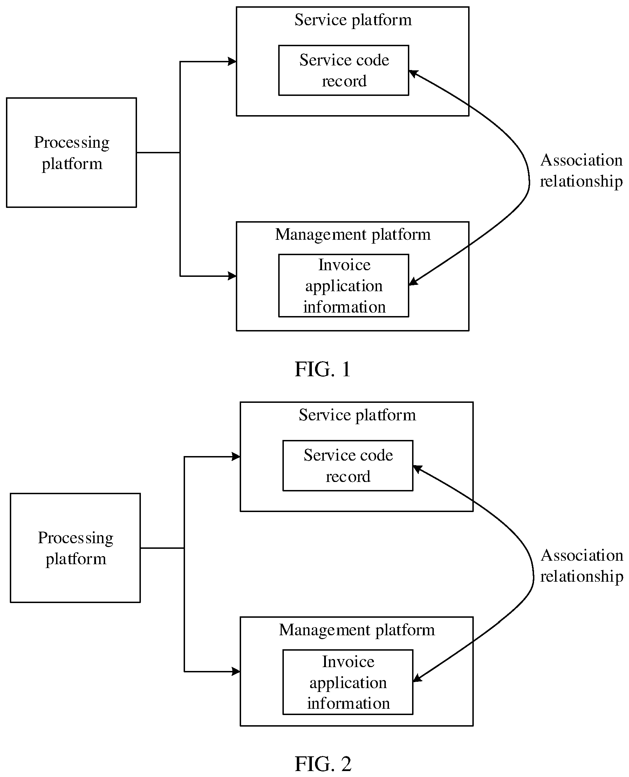

Referring to FIG. 1, the service processing method provided in the embodiments specifically includes step S102 to step S108.

Step S102: Based on an access instruction of a user for a target service, generate a service code creation request including service access information and a user identity identifier and send the service code creation request to a service platform.

In the embodiments, when the user accesses the target service, a service code corresponding to current access is created and sent to the user, so that a merchant terminal scans the service code to implement an integral service of payment and invoice issuance. In the embodiments, the service code includes a payment code of the user created by using the user as an access subject and a payment subject and/or a payment code of an institution created by using the institution as a payment subject and the user as an access subject. Correspondingly, the target service includes a payment access service used to access the payment code of the user and/or the payment code of the institution. Optionally, the service code includes the payment code of the user created by using the user as the access subject and the payment subject, and correspondingly, the target service includes a first service (a user code service) used to access the payment code of the user; or the service code includes the payment code of the institution created by using the institution as the payment subject and the user as the access subject, and correspondingly, the target service includes a second service (an institution code service) used to access the payment code of the institution.

In actual applications, the payment code, for example, a payment code in a third-party payment application, is used to perform payment processing. The user can perform payment processing a plurality of times by using the same payment code, which is the created payment code of the user or the created payment code of the institution in the embodiments. To implement integration of the payment code and an invoice code and solve an interruption problem of payment and invoice issuance in an offline payment environment, the created payment code can be used for both payment and acquisition of invoice application information. The payment code (a user code) of the user includes an identification code that can uniquely identify a user identity and that can be used to perform payment and invoice application. The payment code (an institution code) of the institution includes an identification code that uniquely identifies an institution identity and the user identity and that can be used for payment and invoice application. The service code can exist in the form of an identification code such as a two-dimensional code, a barcode, or an audio code.

The user identity identification includes an identity identifier that can identify the user identity, for example, a user number or a credential number recorded in an identity credential of the user, or a user number or a credential number recorded in a cross-border credential used in a cross-border transit scenario.

The service processing method provided in the embodiments can be applied to a processing platform. The service platform can be a platform for performing service code management. In addition, the service platform can be a sub-platform or a function module of the processing platform, or can be a third-party platform that establishes a data connection to the processing platform. Implementations are not limited in the embodiments.

In a specific execution process, to ensure that a service code that corresponds to the access instruction and can be used to integrate payment processing and invoice application can be sent to the user when the user accesses the target service, a service code record is created, and the user performs service code creation based on a service code identifier included in the service code record and the service access information for the target service each time the user subsequently accesses the target service, so that the created service code is unique to the user. Optionally, the service platform creates the service code record of the user based on the user identity identifier of the user, and the service code record includes the service code identifier. In addition, to read the invoice application information associated with the service code identifier after payment processing, the invoice application information associated with the service code identifier is generated after the service code record is created and the service code identifier is obtained.

Optionally, before the service code creation request including the service access information and the user identity identifier is generated and sent to the service platform based on the access instruction of the user for the target service, the following operations are further performed: A service code request is generated based on service related information that includes the user identity identifier and is submitted by the user, and is sent to the service platform. The service platform creates the service code record based on the service related information. The service code identifier in the created service code record returned by the service platform is received.

Specifically, the service platform can perform encryption processing on the user identity identifier to obtain the service code identifier, and determine the service code identifier and the service related information as the service code record; or invoke a random algorithm to generate a unique identifier as the service code identifier, and determine the service code identifier and the service related information as the service code record.

The service related information includes information, for example, the user identity identifier and a payment account identifier, that needs to be used to create the service code record and/or create the service code. Specifically, the service related information can be determined based on an actual scenario. Implementations are not limited in the embodiments.

Further, the invoice application information for the service code record can be generated after the service code record is created. In the service processing method provided in the embodiments, as shown in FIG. 2, the service code record is applied for, the invoice application information is configured, and an association relationship between the service code record and the invoice application information (an association relationship between the service code identifier and an information identifier) is established, to implement subsequent payment and reading of the invoice application information based on the created service code, and improve awareness of a merchant to the invoice application information during invoice application for a payment bill. As such, the invoice application information in an issuance process of an invoice that needs to be issued for payment can be identified immediately after the payment is completed, to implement integration (of the payment code and the invoice code), thereby solving the interruption problem of payment and invoice issuance in the offline payment environment and also ensuring accuracy of the invoice application information submitted during invoice application.

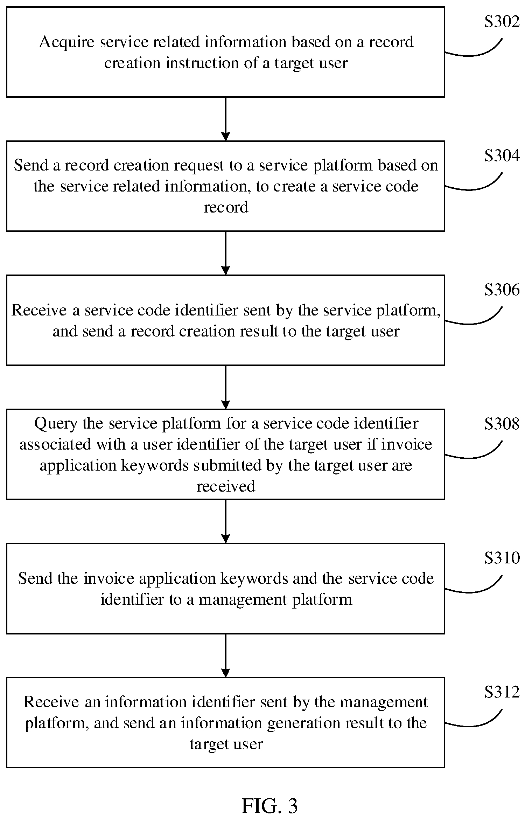

The following provides processes of creating the service code record and generating the invoice application information. Referring to FIG. 3, the process of generating the invoice application information specifically includes the following step S302 to step S312.

Step S302: Acquire service related information based on a record creation instruction of a target user.

The target user includes an individual user or an authorized member. The service related information includes service identification information, for example, a user identity identifier or an institution identity.

Step S304: Send a record creation request to the service platform based on the service related information, to create a service code record.

The service platform determines a service code identifier, and uses the service code identifier and the service related information as the service code record.

Step S306: Receive the service code identifier sent by the service platform, and send a record creation result to the target user.

Step S308: Query the service platform for a service code identifier associated with a user identifier of the target user if invoice application keywords submitted by the target user are received.

Optionally, the user identifier includes a login account identifier or a configured account name of the user.

In addition, step S308 can be replaced with querying the service code identifier associated with the user identifier of the target user if the invoice application keywords submitted by the target user are received.

Step S310: Send the invoice application keywords and the service code identifier to a management platform.

The management platform generates invoice application information based on the invoice application keywords, determines an information identifier of the invoice application information, and establishes an association relationship between the information identifier and the service code identifier.

Step S312: Receive the information identifier sent by the management platform, and send an information generation result to the target user.

In actual applications, because the user can perform payment and invoice application based on the user code or the institution code, the target service includes the user code service or the institution code service. The following separately describes creation of service code records and configuration process of associated invoice application information for the user code and the institution code.

### (1) Creation of a service code record and generation of invoice application information for the user code

In specific implementation, in a process of enabling the user code service, the user code record is created based on user information, and a user code identifier associated with the created user code is obtained. In the user code scenario, the service related information includes the user identity identifier and/or the user information.

In an optional implementation provided in the embodiments, the service code identifier is obtained in the following way: The user information is acquired based on the user identity identifier, and a service request including the user information is generated and sent to the service platform. The service code identifier returned after the service platform creates the service code record based on the service request is received. There is an association relationship between the service code identifier and the user identifier of the user, and the service code record includes the user identity identifier. The service code record includes the user code record, and correspondingly, the service code identifier includes the user code identifier.

Specifically, when the target service is the user code service, in a process in which the user enables the target service, the service code record uniquely identifying the user identity is created. To ensure comprehensiveness of data included in the created service code record and improve validity of a service code subsequently created based on the service code record, the service code record is created based on the user information. However, in actual applications, the user information belongs to privacy of the user to a certain extent. Therefore, to ensure information security of the user, the user information needs to be read with authorization from the user. To be specific, when an enable instruction of the user for the user code service is detected, the user information is read based on an information authorization instruction of the user, and a service request including the user information is generated and sent to the service platform. The service platform uses the user information as the service code record based on the service request, and returns the service code identifier in the service code record to the processing platform. After receiving the service code identifier returned by the service platform, the processing platform establishes the association relationship between the service code identifier and the user identifier, and sends a service code enabling result to the user.

Or, in the embodiments, the service platform can create the service code record in the following way: The user information is determined as the service code record, the service code identifier is generated, and an initial service code associated with the service code record is generated based on the service code identifier. Service code information of the initial service code is returned to the processing platform. The processing platform establishes the association relationship between the user identifier and the service code identifier included in the received service code information; and performs service code rendering based on the service code information, and sends the rendered initial service code to the user.

The process of creating the service code record based on the user information is provided above, and can be replaced with creating the service code record only based on the user identity identifier. Specifically, in the process of creating the service code record, a service request is generated based on the user identity identifier submitted by the user, and is sent to the service platform. The service platform generates the service code record of the user based on the user identity identifier, and returns the service code identifier in the service code record to the processing platform.

In a process in which the service platform generates the service code record of the user based on the user identity identifier, the service platform can perform encryption processing only on the user identity identifier and obtain the service code identifier as the service code record; or can invoke a random generation algorithm to generate a random identifier as the service code identifier, and determine the service code identifier and the user identity identifier as the service code record. In addition, alternatively, the user information can be read based on the user identity identifier, and the service code record can be generated based on the user information. Implementations are not limited in the embodiments, and can be configured based on needs of an actual scenario.

After the service code record is created, to read the invoice application information after payment is completed, the user needs to configure the invoice application information in advance. In an optional implementation provided in the embodiments, the invoice application information is configured in the following way: The service code identifier associated with the user identifier is read based on the invoice application keywords submitted by the user. The invoice application information is generated based on the invoice application keywords, and an association relationship between the invoice application information and the service code identifier is established.

Further, the following operations are performed in a process of generating the invoice application information based on the invoice application keywords and establishing the association relationship between the invoice application information and the service code identifier: An information generation request is generated based on the invoice application keywords and the service code identifier and sent to the management platform. The management platform generates the invoice application information based on the invoice application keywords, and establishes an association relationship between the information identifier of the invoice application information and the service code identifier. The information generation result is returned to the user based on the information identifier returned by the management platform.

Specifically, if the invoice application keywords submitted by the user are detected, the information generation request including the invoice application keywords and the service code identifier associated with the user identifier is generated and sent to the management platform to generate the invoice application information. The information identifier returned by the management platform is received, and a keyword generation result is returned to the user based on the information identifier.

The management platform is a platform for managing the invoice application information. The management platform can be a sub-platform or a function module of the processing platform, or can be a third-party platform that establishes a data connection to the processing platform. Implementations are not limited in the embodiments.

In a process of implementing managing of the invoice application information, the management platform can store the invoice application keywords as the invoice application information, determine the information identifier uniquely identifying the invoice application information, establish the association relationship between the information identifier and the service code identifier, and return the information identifier to the processing platform.

Specifically, the following operations are performed in a process of creating the user code record, creating the invoice application information, and generating invoice application information: The record creation instruction of the user is acquired, and the user identity identifier of the user is acquired. The user information of the user is read based on the user identity identifier, and the service request including the user information is generated and sent to the service platform to create the user code record. The user code identifier returned after the service platform creates the user code record based on the service request is received, and the record creation result is sent to the user. If the invoice application keywords submitted by the user are detected, the service platform is queried for the user code identifier associated with the user identifier, or the user code identifier associated with the user identifier is read. The information generation request is generated based on the user code identifier and the invoice application keywords and sent to the management platform to generate the invoice application information. The information identifier, of the invoice application information associated with the user code identifier, returned by the management platform is received, and the information generation result is sent to the user.

### (2) Creation of a service code record and generation of invoice application information for the institution code

In a process of creating the service code record of the institution code, payment processing needs to be performed based on an institution account and invoice application needs to be performed based on institution information. Therefore, in the process of creating the service code record, a service code record corresponding to the institution code is created based on the institution information. In the institution code scenario, the service related information includes an institution identifier (name), institution location information, and/or an institution code. In addition, the service related information can further include other institution data that can represent uniqueness of the institution.

In an optional implementation provided in the embodiments, the service code record of the institution code is created in the following way: A service request is generated based on institution service information submitted by an authorized member of an institution to which the user belongs, and is sent to the service platform. The institution service information includes the institution identifier. A record creation result is sent to the authorized member based on an institution code identifier returned by the service platform; or institution code rendering is performed based on institution code information associated with a created institution code record and returned by the service platform, and a rendered institution code is sent to the authorized member to send the institution code to an institution user of the institution.

Specifically, similar to the above-mentioned process of creating the service code record of the user code, if an enable instruction of the user for the institution code service is detected, the service request is generated based on the institution service information submitted by the authorized member of the institution to which the user belongs, and is sent to the service platform. The institution service information includes the institution identifier. The service platform creates the institution code record based on the institution service information. The record creation result is sent to the authorized member based on the institution code identifier returned by the service platform; or institution code rendering is performed based on the created institution code information associated with the institution code record and returned by the service platform, and a rendered initial institution code is sent to the authorized member to send the initial institution code to the institution user of the institution. The institution code identifier includes a randomly generated random identifier or an encryption result obtained after encryption processing is performed on the institution identifier.

Optionally, the following operations are performed in a process of configuring the invoice application information for the institution code: The institution code identifier associated with the institution identifier of the institution is queried based on the invoice application keywords of the institution submitted by the authorized member. The invoice application information is generated based on the invoice application keywords, and an association relationship between an information identifier of the invoice application information and the institution code identifier is established.

Specifically, an information generation request is generated based on the invoice application keywords and the institution code identifier and sent to the management platform. The management platform generates the invoice application information based on the invoice application keywords, and establishes the association relationship between the information identifier of the invoice application information and the institution code identifier. The processing platform returns an information generation result to the authorized member based on the information identifier returned by the management platform.

After receiving the service code identifier, the authorized member can associate the service code identifier with each institution user, so that the institution user generates the corresponding service code based on the service code identifier in a process of performing payment based on the institution code. If the target service accessed by the user is the institution code service, the user is an institution user.

It is worthwhile to note that the processes of creating the service code record and generating the invoice application information for the institution code are similar to the above-mentioned processes of creating the service code record and generating the invoice application information for the user code. For related content of the institution code, references can be made to related content of the user code. Details are omitted for simplicity in the embodiments.

After the service code record is created, the user can view the corresponding service code by accessing the target service, and then present the service code for payment and invoice application information reading.

In specific implementation, if the access instruction of the user for the target service is detected, the service code creation request including the service access information and the user identity identifier is generated and sent to the service platform to perform creation of a service code corresponding to the access instruction. Optionally, the service code corresponding to the access instruction is created based on the service code identifier, an access device identifier, an access address, and/or creation time.

It is worthwhile to note that because a corresponding service code is dynamically created for each access instruction, in a process of creating a service code, the service code is created based on a service code identifier and dynamic information. The dynamic information is information related to the current service access, and includes the access device identifier, the access address, an access location, and/or the creation time, and can further include other information. Details are omitted for simplicity in the embodiments. However, regardless of how the dynamic information changes or which information is included in the dynamic information, the service code identifier of the created service code does not change, in other words, the association relationship between the service code identifier and the information identifier of the invoice application information does not change. Based on this, the invoice application information can be effectively processed while payment security is ensured.

Specifically, the user identity identifier associated with the target service is read based on the access instruction of the user for the target service, and the service code creation request including the service access information and the user identity identifier is generated and sent to the service platform based on the access instruction. To ensure uniqueness of the generated service code, in an optional implementation provided in the embodiments, the service code is created in the following way: The access device identifier and the access address in the service access information are read, and the service code identifier associated with the user identity identifier is read. The service code is created based on the access device identifier, the access address, the service code identifier, and the creation time.

The service platform reads the service code identifier associated with the user identity identifier, and creates the service code based on the service code identifier, the access device identifier, the access address, the service code identifier, and the creation time. In addition, in the process of creating the service code, a random code generation algorithm can be further invoked to randomly generate a service code with uniqueness, and an association relationship between the service code and the service code identifier, the access device identifier, the access address, and the creation time can be established.

For example, a user goes to a commercial store for consumption. After a service ends, payment is performed by using a service code and invoice application information is acquired. During payment, the user accesses a service code service to view the service code. Based on an access instruction of the user for the service code service, the processing platform reads an access device identifier and an access Internet Protocol (IP) address included in the access instruction, and reads user identity information; and generates a service code creation request including the user identity information, the access device identifier, and the access IP address, and send the service code creation request to the service platform. The service platform queries a service code identifier associated with a user identity identifier, creates a service code associated with the service code identifier, the access device identifier, the access IP address, and creation time, and sends service code information to the processing platform.

In an optional implementation provided in the embodiments, when the target service is the institution code service, if an association relationship between the user identity identifier of the institution user and the service code identifier of the institution is established, the service code is created in the above-mentioned way. If an association relationship between the user identity identifier of the institution user and the service code identifier of the institution is not established, because service code creation needs to be performed based on the service code record of the institution, to make the created service code better identify the institution, service code creation is performed in the following way: The institution identifier associated with the user identity identifier is read, and the service code identifier associated with the institution identifier is read. The service code is created based on the service code identifier, the creation time, and the access device identifier and/or the access address in the service access information.

Specifically, in the process in which the service platform creates the service code, the institution identifier associated with the user identity identifier is queried, and the service code identifier associated with the institution identifier is read. The service code is created based on the found service code identifier, the creation time, and the access device identifier and the access address in the service access information; or the random code generation algorithm is invoked to generate a code with uniqueness, the code is used as the service code, and an association relationship between the service code and the service code identifier, the creation time, and the access device identifier and the access address in the service access information is established. The service code is returned to the processing platform.

The service code provided above is created by the service platform. In addition, in the embodiments, the service code can alternatively be created by the processing platform. Correspondingly, the above-mentioned creation of the service code record and generation of the invoice application information can alternatively be completed by the processing platform. To be specific, step S102 can be replaced with performing service code creation based on the user identity identifier of the user and the service access information included in the access instruction of the user for the target service. Correspondingly, step S104 can be replaced with performing service code rendering based on the service code information obtained through service code creation, and sending the rendered service code corresponding to the access instruction to the user. The steps obtained after replacement form a new implementation with step S106 and step S108 provided in the embodiments.

Step S104: Perform service code rendering based on the service code information returned after the service platform performs service code creation, and send the rendered service code corresponding to the access instruction to the user.

To ensure security of the service code and reduce user resource loss caused by using the service code for payment and invoice issuance by another person after the service code is leaked, for each access instruction, a service code corresponding to the access instruction is created and sent to the user.

In a specific execution process, the service code creation request including the service access information and the user identity identifier is generated and sent to the service platform based on the access instruction of the user for the target service. The service platform reads the service code identifier associated with the user identity identifier based on the service code creation request, creates the service code information corresponding to the access instruction based on the service code identifier, the creation time, the access device identifier, and the access address, and returns the service code information to the processing platform. The processing platform performs service code rendering based on the service code information, obtains the service code corresponding to the access instruction, and sends the service code to the user, so that the user presents the service code to the merchant, and the merchant scans, based on the configured merchant terminal, the service code presented by the user.

The merchant terminal performs payment processing by scanning the service code presented by the user. To improve payment validity and ensure payment security, in an optional implementation provided in the embodiments, the following operations are further performed before payment processing is performed based on the user code: Validity verification is performed on the service code based on the service code identifier submitted after the merchant terminal scans the service code. If verification succeeds, a scenario service request including the service code identifier is sent to the service platform. The service platform queries service scenario information in the service code record associated with the service code identifier, and returns the service scenario information. The service scenario information returned by the service platform is sent to the merchant terminal.

In the process of creating the service code record, the service scenario information can be configured, and the service scenario information can also be used as a part of the service code record. Therefore, the service scenario information includes configured payment permission scenarios and scenario permission amounts of the payment permission scenarios. For example, to constrain a consumption behavior of the user, the configured payment permission scenarios include a game payment scenario, a food payment scenario, and a clothing payment scenario. A scenario permission amount of the game payment scenario is m1, a scenario permission amount of the food payment scenario is m2, and a scenario permission amount of the service payment scenario is m3.

Specifically, after the service code identifier submitted after the merchant terminal scans and decodes the service code is acquired, validity verification is first performed on the service code. The validity verification includes verifying whether the service code identifier has an associated service code record and/or whether the service code identifier has an associated user identifier; and if no, determining that verification fails, and sending a service code invalid reminder to the merchant terminal; or if yes, determining that verification succeeds, and querying the service platform for the service scenario information associated with the service code identifier (the service scenario information in the service code record associated with the service code identifier). To improve awareness of the merchant to the current payment and reduce cases in which all service scenario information is sent to the merchant and the merchant cannot accurately determine whether the current payment satisfies the service scenario information, after the service scenario information returned by the service platform is received, payment scenario information in the service scenario information is extracted and sent to the merchant terminal, so that the merchant performs scenario verification. In a process of extracting the payment scenario information in the service scenario information, a corresponding payment scenario is determined based on payment information submitted when the merchant terminal submits the service code identifier, and the payment scenario information corresponding to the payment scenario is read from the service scenario information.

Continuing with the above-mentioned example, the merchant scans, by using the configured merchant terminal, the service code presented by the user. The processing platform acquires the service code identifier and the payment information that are uploaded by the merchant terminal after decoding, and verifies whether the service code identifier has an associated service code record and user identifier; and if yes, queries the service platform for the service scenario information associated with the service code identifier, determines, based on the payment information, that the payment scenario corresponding to the current payment is the game payment scenario, reads scenario permission amount m1 of the game payment scenario in the service scenario information, and sends scenario permission amount m1 to the merchant terminal.

In addition, to further constrain the consumption behavior of the user and prevent the merchant from still performing payment processing when an actual payment amount is greater than the scenario permission amount, in the embodiments, after the payment scenario information in the service scenario information is extracted, it is verified whether a payment amount in the payment information is less than or equal to the scenario permission amount in the payment scenario information. If no, a permission barring reminder is sent to the merchant terminal, and the user can perform payment based on another channel. If yes, a payment confirmation reminder is sent to the merchant terminal or payment processing is performed.

To further improve validity of managing the service code, in the embodiments, a valid period is configured for the created service code corresponding to the access instruction. In this case, the validity verification includes verifying whether the service code identifier has an associated service code record, whether the service code identifier has an associated user identifier, and/or whether the service code corresponding to the service code identifier is in the valid period; and if yes, determining that verification succeeds; or if no, determining that verification fails.

A status of the service code can be further marked to improve validity of managing the service code. For example, after the service code is created, the service status of the service code is marked as an unpaid state. After payment processing is performed, the service status of the service code is updated to a paid state. To prevent a plurality of times of invoice issuance on a transaction bill obtained after payment processing is performed based on the service code, the service status of the service code is marked as an invoice issued state after invoice issuance is performed. An issued invoice issuance result is subsequently returned if a read request for the invoice application information of the service code is detected. Correspondingly, the validity verification includes verifying whether the service code identifier has an associated service code record, whether the service code identifier has an associated user identifier, whether the service status corresponding to the service code identifier is the unpaid state, and/or whether the service code corresponding to the service code identifier is in the valid period; and if yes, determining that verification succeeds; or if no, determining that verification fails.

Step S106: Perform payment processing based on a payment request submitted after the merchant terminal scans the service code, and read invoice application information associated with a service code identifier included in the payment request after payment succeeds.

In specific implementation, payment processing is performed based on the payment request submitted by the merchant terminal, and in the payment processing process, payment processing is performed based on a payment account associated with the service code.

To improve validity of payment processing and reduce user resource loss, in the embodiments, in the process of performing payment processing based on the payment request, the payment request is sent to a payment platform, and the payment platform performs payment verification on the payment information in the payment request, and performs payment processing after verification succeeds. Optionally, the payment verification includes determining a payment scenario based on the payment information, and reading payment scenario information corresponding to the payment scenario in the service scenario information; and performing permission verification on the payment request based on the payment scenario information and the payment information. The performing permission verification on the payment request based on the payment scenario information and the payment information includes verifying whether the payment amount in the payment information is less than or equal to the scenario permission amount in the payment scenario information; and if yes, determining that verification succeeds.

Specifically, the payment platform can perform payment verification in cooperation with the service platform. After receiving the payment request, the payment platform sends the payment information included in the payment request to the service platform. The service platform determines the payment scenario based on the payment information, and reads the service scenario information in the service code record associated with the service code identifier included in the payment information; determines the payment scenario information corresponding to the payment scenario in the service scenario information; and verifies whether the payment amount included in the payment information is less than or equal to the scenario permission amount in the payment scenario information. If no, the service platform sends a permission failure reminder to the payment platform, and the payment platform sends a payment failure reminder to the user. If yes, the service platform sends a permission reminder including the payment account in the service code record to the payment platform, and the payment platform performs payment processing based on the payment account.

Corresponding to the embodiments of sending the service scenario information to the merchant terminal provided above, in an optional implementation provided in the embodiments, the payment request submitted by the merchant terminal when the payment information matches the service scenario information is sent to the payment platform; and the payment platform performs payment verification on the payment information in the payment request, and performs payment processing after verification succeeds.

After payment succeeds, to improve convenience of the merchant in performing invoice application, the invoice application information associated with the service code identifier is read after payment succeeds, and the invoice application information and a payment result are sent to the merchant terminal to perform invoice issuance.

Step S108: Deliver the invoice application information to the merchant terminal to perform invoice issuance.

In specific implementation, after payment succeeds, the invoice application information associated with the service code identifier is read, and the invoice application information is sent to the merchant terminal to perform invoice issuance.

After receiving the invoice application information, the merchant terminal can submit an invoice issuance application to an invoice platform based on the invoice application information and related information. The invoice platform sends an invoice to the merchant and a user information channel in the invoice application information after completing invoice issuance. The user information channel includes a channel, for example, an account or an email address, that can represent the user identity and can receive information.

In a specific execution process, to reduce cases in which invoice application information corresponding to a plurality of payment scenarios associated with the service code identifier is sent to the merchant terminal and the merchant terminal cannot determine, in a short time, invoice application information applicable to current payment, in an optional implementation provided in the embodiments, the invoice application information is sent to the merchant terminal in the following way: The payment scenario corresponding to the payment request is determined based on the payment information included in the payment request. Scenario invoice application information corresponding to the payment scenario is extracted from the invoice application information and sent to the merchant terminal.

In other words, the payment scenario corresponding to the current payment is first determined; and then, the scenario invoice application information corresponding to the payment scenario is extracted from the invoice application information, and the scenario invoice application information is sent to the merchant terminal, so that efficiency of performing invoice issuance by the merchant is improved.

Step S108 can be replaced with sending the invoice application information and the payment result to the merchant terminal to perform invoice issuance. The step obtained after replacement forms a new implementation with other processing steps provided in the embodiments. In addition, step S108 can alternatively be replaced with sending the invoice application information to the merchant terminal. The step obtained after replacement forms a new implementation with other processing steps provided in the embodiments.

In addition to sending, after payment succeeds, the invoice application information and the payment result to the merchant terminal to perform invoice issuance, the payment result of successful payment can be first sent to the merchant terminal after payment succeeds, and then a cashier terminal of the merchant sequentially initiates, without perception, acquisition of the invoice application information by using the service code identifier, so that the merchant terminal can acquire the payment result and the invoice application information together after payment is completed. The payment result of successful payment is sent to the merchant terminal after payment succeeds. After receiving the payment result, the merchant terminal reads the service code identifier included in the payment result, and submits the service code identifier to the processing platform. The processing platform reads the invoice application information associated with the service code identifier from the management platform, and sends the invoice application information to the merchant terminal. The merchant terminal receives and presents the invoice application information. In an optional implementation provided in the embodiments, after payment processing is performed based on the payment request submitted after the merchant terminal scans the service code, the service status of the service code is updated to the paid state after payment succeeds, and the payment result is sent to the merchant terminal. The service code identifier submitted by the merchant terminal is acquired. The invoice application information associated with the service code identifier included in the payment request is read based on the payment result of successful payment and sent to the merchant terminal.

In a specific execution process, the merchant terminal includes a cashier terminal of a cashier device configured by the merchant. If the cashier terminal configured by the merchant does not have the capability of initiating invoice application, the service code can be scanned again by using an invoice terminal of an invoice device configured by the merchant, to perform invoice issuance.

Specifically, step S106 and step S108 can be replaced with performing payment processing based on the payment request submitted after the cashier terminal scans the service code, and sending the payment result to the cashier terminal after payment succeeds; and acquiring the service code identifier submitted after the invoice terminal of the merchant scans the service code, reading the invoice application information associated with the service code identifier, and sending the invoice application information to the invoice terminal.

Optionally, after the service code identifier submitted by the invoice terminal of the merchant is acquired, it is verified whether the service code corresponding to the service code identifier is in the valid period. If no, an invalid reminder is sent to the invoice terminal; or if yes, it is verified whether the service status of the service code is the paid state. If yes, the invoice application information associated with the service code identifier is read; or if the service status is the unpaid state, an unpaid reminder is sent to the invoice terminal, the service status of the service code is updated to the paid state based on a paid instruction submitted by the invoice terminal, and the invoice application information associated with the service code identifier is read. The invoice application information is sent to the invoice terminal, and the service status of the service code is updated to the invoice issued state. An invoice issued reminder is sent to the invoice terminal if the service status is the invoice issued status.

In other words, the service code identifier submitted after the invoice terminal of the merchant scans the service code is acquired. If the service code is in the valid period and/or the service status of the service code is the paid state, the invoice application information associated with the service code identifier is read and sent to the invoice terminal to perform invoice issuance.

It is worthwhile to note that one service code record can be associated with a plurality of pieces of invoice application information. If a plurality of pieces of invoice application information are read, target invoice application information for invoice issuance of current payment is determined through interaction with the user and sent to the merchant terminal.

In conclusion, in the service processing method provided in the embodiments, the processing platform generates the service code creation request including the service access information and the user identity identifier based on the access instruction of the user for the service code service, and sends the service code creation request to the service platform based on the access instruction. The service platform reads the service code identifier associated with the user identity identifier, creates the service code corresponding to the access instruction based on the service code identifier and dynamic information in the service access information, obtains the service code information, and sends the service code information to the processing platform. After receiving the service code information, the processing platform performs service code rendering based on the service code information, and sends the rendered service code corresponding to the access instruction to the user. The merchant terminal scans and identifies the service code presented by the user, to obtain the service code identifier, and submits the payment request including the service code identifier to the processing platform. The processing platform sends the payment request to the payment platform. The payment platform sends the payment information and/or the service code identifier included in the payment request to the service platform. The service platform verifies whether the service code identifier has an associated service code record and/or whether the payment information satisfies a scenario permission condition in the service code record associated with the service code identifier. If yes, the service platform returns, to the payment platform, a verification result that verification on the payment account included in the service code record succeeds; or if no, the service platform returns a verification result that verification fails to the payment platform. If the payment platform receives the verification result that verification succeeds that is returned by the service platform, the payment platform performs payment processing based on the payment account included in the verification result, and sends the payment result to the processing platform. If the payment platform receives the verification result that verification fails that is returned by the service platform, the payment platform sends the payment failure reminder to the processing platform. After acquiring the payment result sent by the payment platform, the processing platform sends the service code identifier to the management platform, and the management platform queries the invoice application information associated with the service code identifier, and returns the invoice application information to the processing platform. The processing platform sends the received invoice application information to the merchant terminal. After receiving the invoice application information, the merchant terminal generates the invoice issuance application based on the invoice application information and related information, and sends the invoice issuance application to the invoice platform. The invoice platform sends the invoice to the merchant terminal and the user after issuing the invoice. As such, two codes for payment and invoice issuance are integrated, and the procedure of consumption, payment, and invoice issuance is completed without interruption during offline consumption, thereby reducing untrue data caused by manual invoice application. The service code obtained by integrating the two codes supports a usage scenario in which an order system and an invoice system do not need to be connected. In addition, because of the service code, the invoice service information is acquired by scanning the service code to obtain the invoice and related payment information.

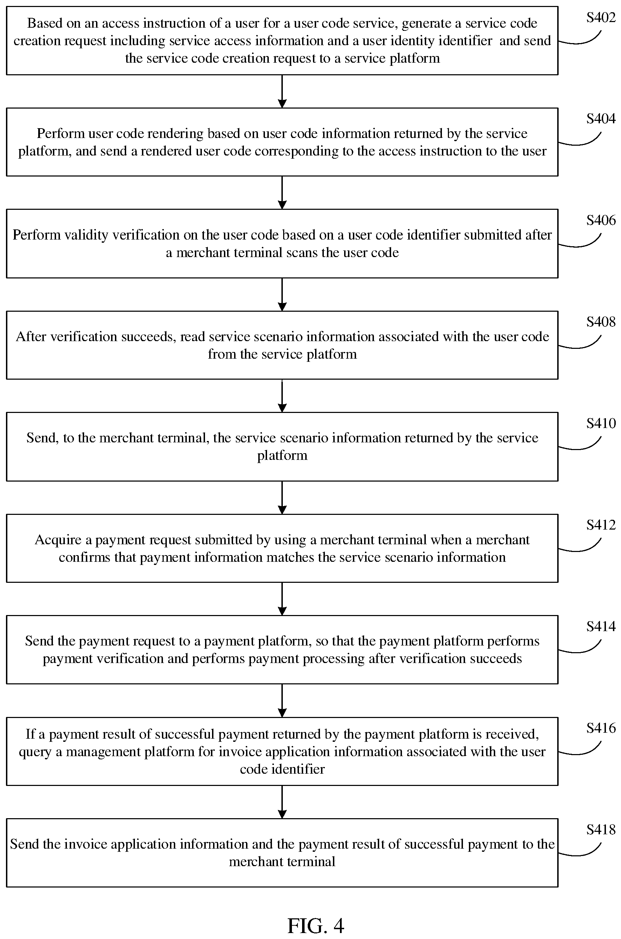

The service processing method provided in the embodiments is further described below by using an example in which the service processing method provided in the embodiments is applied to the user code scenario. Referring to FIG. 4, the service processing method applied to the user code scenario specifically includes the following steps.

Step S402: Based on an access instruction of a user for a user code service, generate a service code creation request including service access information and a user identity identifier and send the service code creation request to a service platform.

The service platform creates a user code corresponding to the access instruction based on dynamic information and a user code identifier associated with the user identity identifier, obtains user code information, and sends the user code information to a processing platform.

Step S404: Perform user code rendering based on the user code information returned by the service platform, and send the rendered user code corresponding to the access instruction to the user.

The user code includes a payment code of the user created by using the user as an access subject and a payment subject.

Step S406: Perform validity verification on the user code based on the user code identifier submitted after a merchant terminal scans the user code.

Step S408: After verification succeeds, read service scenario information associated with the user code from the service platform.

If verification fails, an invalid reminder is sent to the merchant terminal.

Step S410: Send, to the merchant terminal, the service scenario information returned by the service platform.

Step S412: Acquire a payment request submitted by using a merchant terminal when a merchant confirms that payment information matches the service scenario information.

Step S414: Send the payment request to a payment platform, so that the payment platform performs payment verification and performs payment processing after verification succeeds.

Step S416: If a payment result of successful payment returned by the payment platform is received, query a management platform for invoice application information associated with the user code identifier.

If a payment result of unsuccessful payment returned by the payment platform is received, a payment failure reminder is sent to the merchant terminal.

Step S418: Send the invoice application information and the payment result of successful payment to the merchant terminal, where the merchant terminal performs invoice issuance based on the invoice application information and related information.

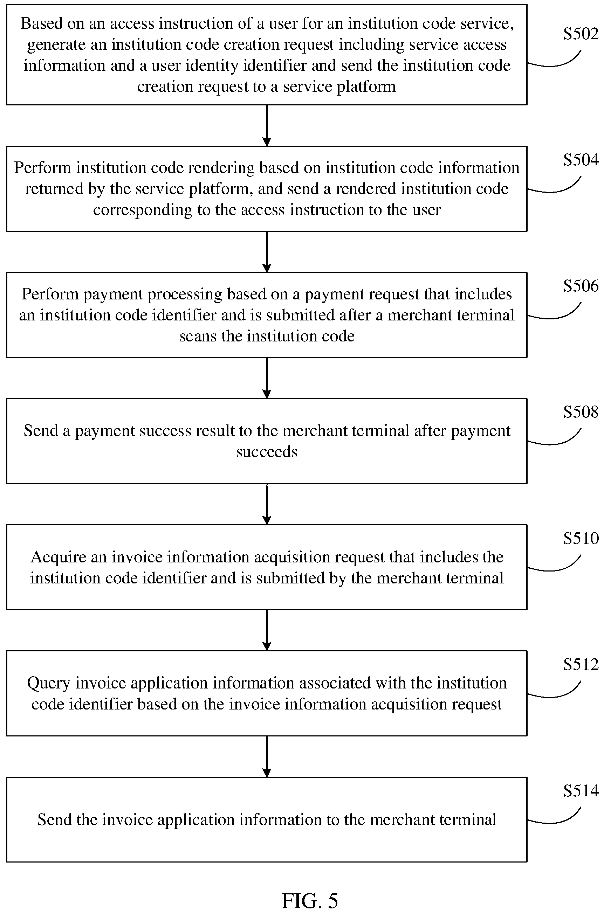

The service processing method provided in the embodiments is further described below by using an example in which the service processing method provided in the embodiments is applied to the institution code scenario. Referring to FIG. 5, the service processing method applied to the institution code scenario specifically includes the following steps.

Step S502: Based on an access instruction of a user for an institution code service, generate an institution code creation request including service access information and a user identity identifier and send the institution code creation request to a service platform.

The service platform queries an institution code identifier associated with the user identity identifier, creates an institution code corresponding to the access instruction based on dynamic information and the institution code identifier, obtains institution code information, and sends the institution code information to a processing platform.

Step S504: Perform institution code rendering based on the institution code information returned by the service platform, and send the rendered institution code corresponding to the access instruction to the user.

The institution code includes a payment code of an institution created by using the institution as a payment subject and the user as an access subject.

Step S506: Perform payment processing based on a payment request that includes the institution code identifier and is submitted after a merchant terminal scans the institution code.

Step S508: Send a payment success result to the merchant terminal after payment succeeds.

The merchant terminal submits the institution code identifier to the processing platform after detecting the payment result of successful payment.

Step S510: Acquire an invoice information acquisition request that includes the institution code identifier and is submitted by the merchant terminal.

Step S512: Query invoice application information associated with the institution code identifier based on the invoice information acquisition request.

Step S514: Send the invoice application information to the merchant terminal.

The merchant terminal generates an invoice issuance application based on the invoice application information and related information, and sends the invoice issuance application to an invoice platform. An invoice returned by the invoice platform is received.

The related information includes information that needs to be provided by a merchant in an invoice issuance process and related payment information of current payment. The information that needs to be provided by the merchant can be prestored in the merchant terminal. The related payment information can be read from payment information and the payment result.

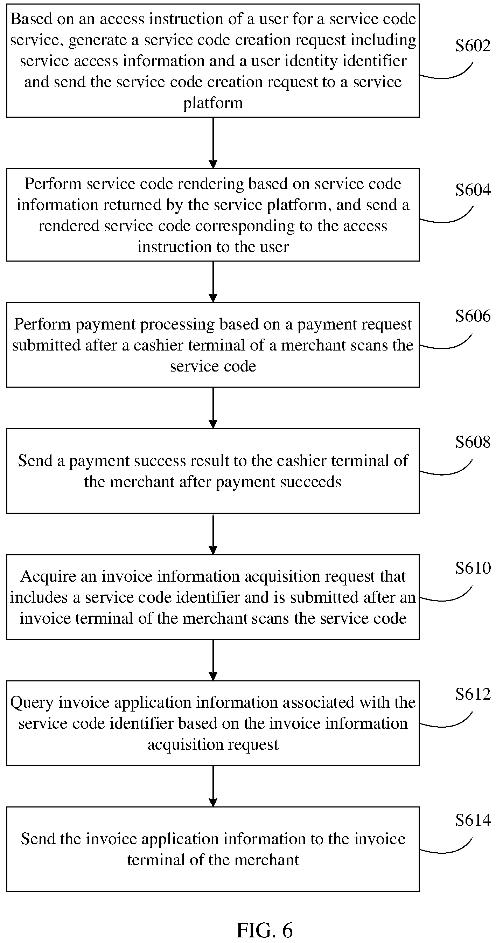

Embodiments of another service processing method provided in this specification are as follows: Referring to FIG. 6, the service processing method provided in the embodiments specifically includes the following steps.

Step S602: Based on an access instruction of a user for a service code service, generate a service code creation request including service access information and a user identity identifier and send the service code creation request to a service platform.

The service platform creates a service code corresponding to the access instruction based on dynamic information and a service code identifier associated with the user identity identifier, obtains service code information, and sends the service code information to a processing platform.

Step S604: Perform service code rendering based on the service code information returned by the service platform, and send the rendered service code corresponding to the access instruction to the user.

Step S606: Perform payment processing based on a payment request submitted after a cashier terminal of a merchant scans the service code.

Step S608: Send a payment success result to the cashier terminal of the merchant after payment succeeds.

Step S610: Acquire an invoice information acquisition request that includes the service code identifier and is submitted after an invoice terminal of the merchant scans the service code.

Step S612: Query invoice application information associated with the service code identifier based on the invoice information acquisition request.

Step S610 and step S612 can be replaced with querying the invoice application information associated with the service code based on the invoice application information submitted after the invoice terminal of the merchant scans the service code. The steps obtained after replacement form a new implementation with other processing steps provided in the embodiments. Optionally, the querying the invoice application information associated with the service code includes querying the invoice application information associated with the service code identifier. The invoice information acquisition request includes the service code identifier.

Step S614: Send the invoice application information to the invoice terminal of the merchant.

The invoice terminal of the merchant generates an invoice issuance application based on the invoice application information and related information, and sends the invoice issuance application to an invoice platform. An invoice returned by the invoice platform is received.

It is worthwhile to note that the service processing method provided in the embodiments is similar to the service processing method provided above in terms of execution process. For a specific implementation process of step S602 to step S614, references can be made to related implementation content of step S102 to step S108 provided in the above-mentioned embodiments. Details are omitted for simplicity in the embodiments.

Embodiments of a service processing apparatus provided in this specification are as follows: The service processing method is provided in the above-mentioned embodiments, and correspondingly, a service processing apparatus is further provided, and is described below with reference to the accompanying drawings.

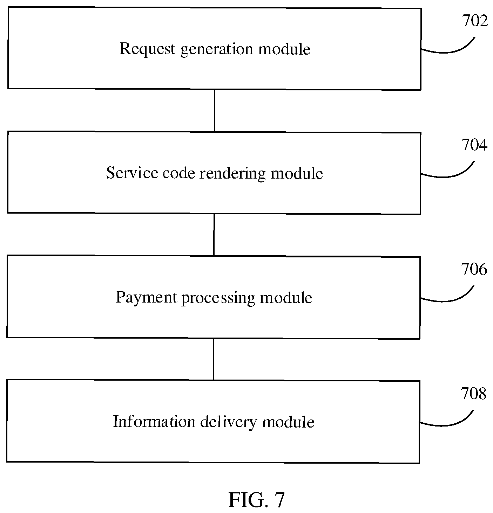

FIG. 7 is a schematic diagram illustrating a service processing apparatus, according to one or more embodiments.

The apparatus embodiments correspond to the method embodiments, and therefore, are described briefly. For a related part, references can be made to the corresponding descriptions of the method embodiments provided above. The apparatus embodiments described below are merely examples.

One or more embodiments provide a service processing apparatus, including: a request generation module 702, configured to, based on an access instruction of a user for a target service, generate a service code creation request including service access information and a user identity identifier and send the service code creation request to a service platform; a service code rendering module 704, configured to perform service code rendering based on service code information returned after the service platform performs service code creation, and send a rendered service code corresponding to the access instruction to the user; a payment processing module 706, configured to perform payment processing based on a payment request submitted after a merchant terminal scans the service code, and read invoice application information associated with a service code identifier included in the payment request after payment succeeds; and an information delivery module 708, configured to deliver the invoice application information to the merchant terminal to perform invoice issuance.

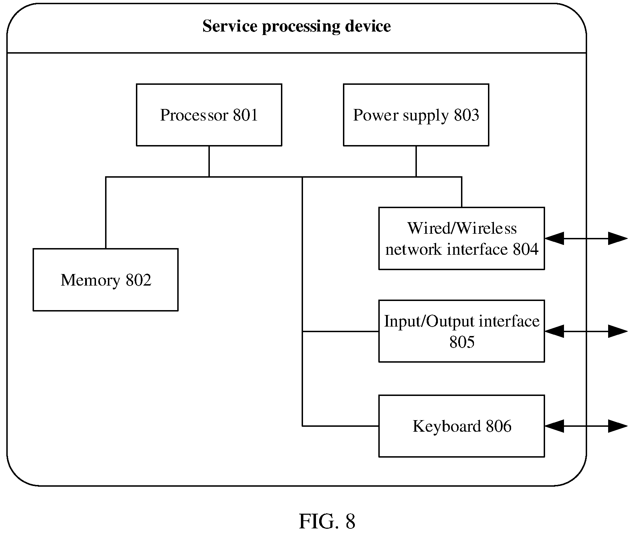

Embodiments of a service processing device provided in this specification are as follows: Corresponding to the above-mentioned service processing method, based on the same technical concept, one or more embodiments of this specification further provide a service processing device. The service processing device is configured to perform the service processing method provided above. FIG. 8 is a schematic structural diagram illustrating a service processing device, according to one or more embodiments of this specification.

The service processing device provided in the embodiments includes the following: As shown in FIG. 8, the service processing device can vary greatly based on configuration or performance, and can include one or more processors 801 and a memory 802. The memory 802 can store one or more storage applications or data. The memory 802 can be used for transitory storage or persistent storage. The applications stored in the memory 802 can include one or more modules (not shown in the figure), and each module can include a series of computer-executable instructions in the service processing device. Still further, the processor 801 can be configured to communicate with the memory 802 to execute, on the service processing device, a series of computer-executable instructions in the memory 802. The service processing device can further include one or more power supplies 803, one or more wired or wireless network interfaces 804, one or more input/output interfaces 805, one or more keyboards 806, etc.

In one or more specific embodiments, the service processing device includes a memory and one or more programs. The one or more programs are stored in the memory. The one or more programs can include one or more modules. Each module can include a series of computer-executable instructions in the service processing device. Upon configuration, the one or more processors execute the one or more programs, including executing the following computer-executable instructions: based on an access instruction of a user for a target service, generating a service code creation request including service access information and a user identity identifier and sending the service code creation request to a service platform; performing service code rendering based on service code information returned after the service platform performs service code creation, and sending a rendered service code corresponding to the access instruction to the user; performing payment processing based on a payment request submitted after a merchant terminal scans the service code, and reading invoice application information associated with a service code identifier included in the payment request after payment succeeds; and delivering the invoice application information to the merchant terminal to perform invoice issuance.

Embodiments of a storage medium provided in this specification are as follows: Corresponding to the above-mentioned service processing method, based on the same technical concept, one or more embodiments of this specification further provide a storage medium.

The storage medium provided in the embodiments is configured to store computer-executable instructions. When the computer-executable instructions are executed by a processor, the following procedure is implemented: based on an access instruction of a user for a target service, generating a service code creation request including service access information and a user identity identifier and sending the service code creation request to a service platform; performing service code rendering based on service code information returned after the service platform performs service code creation, and sending a rendered service code corresponding to the access instruction to the user; performing payment processing based on a payment request submitted after a merchant terminal scans the service code, and reading invoice application information associated with a service code identifier included in the payment request after payment succeeds; and delivering the invoice application information to the merchant terminal to perform invoice issuance.

It is worthwhile to note that the embodiments of the storage medium in this specification and the embodiments of the service processing method in this specification are based on the same inventive concept. Therefore, for specific implementation of the embodiments, references can be made to implementation of the above-mentioned corresponding method, and details are omitted for simplicity.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need the shown particular order or sequential order to achieve the desired results. In some implementations, multi-tasking and parallel processing are feasible or can be advantageous.

In the 1930s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function thereof is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written into a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the very-high-speed integrated circuit hardware description language (VHDL) and Verilog are most commonly used. A person skilled in the art should also understand that a hardware circuit that implements a logical method procedure can be readily obtained once the method procedure is logically programmed by using the several above-mentioned hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicon Labs C8051F320. The memory controller can also be implemented as a part of the control logic of the memory. A person skilled in the art also knows that, in addition to implementing the controller by using the computer-readable program code, logic programming can be performed on method steps to allow the controller to implement the same function in forms of the logic gate, the switch, the application-specific integrated circuit, the programmable logic controller, the built-in microcontroller, etc. Therefore, the controller can be considered as a hardware component, and an apparatus configured to implement various functions in the controller can also be considered as a structure in the hardware component. Or the apparatus configured to implement various functions can even be considered as both a software module implementing the method and a structure in the hardware component.

The system, apparatus, module, or unit described in the above-mentioned embodiments can be specifically implemented by a computer chip or entity, or can be implemented by a product that has a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or any combination of these devices.

For ease of description, the above-mentioned apparatus is described by dividing functions into various units. Certainly, when the embodiments of this specification are implemented, functions of the units can be implemented in one or more pieces of software and/or hardware.

A person skilled in the art should understand that one or more embodiments of this specification can be provided as methods, systems, or computer program products. Therefore, one or more embodiments of this specification can be in a form of hardware only embodiments, software only embodiments, or embodiments with a combination of software and hardware. In addition, this specification can use a form of a computer program product that is implemented on one or more computer-usable storage media (including but not limited to a disk storage, a CD-ROM, an optical storage, etc.) that include computer-usable program code.

This specification is described with reference to the flowcharts and/or block diagrams of the method, the device (system), and the computer program product based on the embodiments of this specification. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable memory that can instruct the computer or the another programmable data processing device to work in a specific way, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions can be loaded onto the computer or the another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), an input/output interface, a network interface, and a memory.

The memory may include at least one of a non-persistent memory, a random access memory (RAM), and/or a nonvolatile memory in a computer-readable medium, for example, a read-only memory (ROM) or a flash read-only memory (flash RAM). The memory is an example of the computer-readable medium.

The computer-readable medium includes persistent, non-persistent, movable, and unmovable media that can store information by using any method or technology. The information can be computer-readable instructions, a data structure, a program module, or other data. Examples of a computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic tape/magnetic disk storage or another magnetic storage device, or any other non-transmission medium that can be used to store information that can be accessed by a computing device. Based on the definition in this specification, the computer-readable medium does not include computer-readable transitory media such as a modulated data signal and carrier.

It is worthwhile to further note that the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a..." does not preclude the existence of additional identical elements in the process, method, product or device that includes the element.

One or more embodiments of this specification can be described in the general context of computer-executable instructions executed by a computer, for example, a program module. Generally, the program module includes a routine, a program, an object, a component, a data structure, etc. that performs a specific task or implements a specific abstract data type. Alternatively, the one or more embodiments of this specification can be practiced in distributed computing environments. In the distributed computing environments, tasks are performed by remote processing devices connected through a communication network. In the distributed computing environments, the program module can be located in both local and remote computer storage media including storage devices.

The embodiments of this specification are all described in a progressive way. For same or similar parts in the embodiments, mutual references can be made to the embodiments. Each embodiment focuses on a difference from other embodiments. In particular, the system embodiments are similar to the method embodiments, and therefore, are described briefly. For a related part, references can be made to related descriptions of the method embodiments.

The above-mentioned descriptions are merely embodiments of this specification and are not intended to limit this specification. A person skilled in the art can make various changes and variations to this specification. Any modification, equivalent replacement, improvement, etc. made without departing from the spirit and principle of this specification shall fall within the scope of the claims in this specification.

## Claims

1. A service processing method, comprising:
based on an access instruction of a user for a target service, generating a service code creation request comprising service access information and a user identity identifier and sending the service code creation request to a service platform;
performing service code rendering based on service code information returned after the service platform performs service code creation, and sending a rendered service code corresponding to the access instruction to the user;
performing payment processing based on a payment request submitted after a merchant terminal scans the service code, and reading invoice application information associated with a service code identifier comprised in the payment request after payment succeeds; and
delivering the invoice application information to the merchant terminal to perform invoice issuance.

2. The service processing method according to claim 1, wherein the service platform creates a service code record of the user based on the user identity identifier, and the service code record comprises the service code identifier; and
the service code corresponding to the access instruction is created based on the service code identifier, an access device identifier, an access address, and/or creation time.

3. The service processing method according to claim 1, wherein
the service code comprises a payment code of the user created by using the user as an access subject and a payment subject, and correspondingly, the target service comprises a first service used to access the payment code of the user; or
the service code comprises a payment code of an institution created by using the institution as a payment subject and the user as an access subject, and correspondingly, the target service comprises a second service used to access the payment code of the institution.

4. The service processing method according to claim 1, before the step of generating a service code creation request comprising service access information and a user identity identifier based on an access instruction of a user for a target service, and sending the service code creation request to a service platform based on the access instruction is performed, further comprising:
acquiring user information based on the user identity identifier, generating a service request comprising the user information, and sending the service request to the service platform; and
receiving the service code identifier returned after the service platform creates a service code record based on the service request, wherein
there is an association relationship between the service code identifier and a user identifier of the user, and the service code record comprises the user identity identifier.

5. The service processing method according to claim 4, after the step of receiving the service code identifier returned after the service platform creates a service code record based on the service request is performed, further comprising:
reading the service code identifier associated with the user identifier based on invoice application keywords submitted by the user; and
generating the invoice application information based on the invoice application keywords, and establishing an association relationship between the invoice application information and the service code identifier.

6. The service processing method according to claim 5, wherein the generating the invoice application information based on the invoice application keywords, and establishing an association relationship between the invoice application information and the service code identifier comprises:
generating an information generation request based on the invoice application keywords and the service code identifier, and sending the information generation request to a management platform, wherein the management platform generates the invoice application information based on the invoice application keywords, and establishes an association relationship between an information identifier of the invoice application information and the service code identifier; and
returning an information generation result to the user based on the information identifier returned by the management platform.

7. The service processing method according to claim 1, before the step of generating a service code creation request comprising service access information and a user identity identifier based on an access instruction of a user for a target service, and sending the service code creation request to a service platform based on the access instruction is performed, further comprising:
generating a service request based on institution service information submitted by an authorized member of an institution to which the user belongs, and sending the service request to the service platform, wherein the institution service information comprises an identifier of the institution; and
sending a record creation result to the authorized member based on an institution code identifier returned by the service platform; or performing institution code rendering based on institution code information associated with a created institution code record and returned by the service platform, and sending a rendered institution code to the authorized member to send the institution code to an institution user of the institution.

8. The service processing method according to claim 1, wherein the service code creation comprises:
reading an access device identifier and an access address in the service access information, and reading the service code identifier associated with the user identity identifier; and
creating the service code based on the access device identifier, the access address, the service code identifier, and creation time.

9. The service processing method according to claim 1, wherein the service code creation comprises:
reading an institution identifier associated with the user identity identifier, and reading the service code identifier associated with the institution identifier; and
creating the service code based on the service code identifier, creation time, and an access device identifier and/or an access address in the service access information.

10. The service processing method according to claim 1, after the operation of performing payment processing based on a payment request submitted after a merchant terminal scans the service code is performed, and before the operation of reading invoice application information associated with a service code identifier comprised in the payment request after payment succeeds is performed, further comprising:
after payment succeeds, updating a service status of the service code to a paid state, and sending a payment success result to the merchant terminal.

11. The service processing method according to claim 10, further comprising:
acquiring the service code identifier submitted by the merchant terminal, wherein
the operation of reading invoice application information associated with a service code identifier comprised in the payment request after payment succeeds is performed after the acquiring the service code identifier submitted by the merchant terminal.

12. The service processing method according to claim 1, after the step of performing service code rendering based on service code information returned after the service platform performs service code creation, and sending a rendered service code corresponding to the access instruction to the user is performed, and before the step of performing payment processing based on a payment request submitted after a merchant terminal scans the service code, and reading invoice application information associated with a service code identifier comprised in the payment request after payment succeeds is performed, further comprising:
performing validity verification on the service code based on the service code identifier submitted after the merchant terminal scans the service code;
if verification succeeds, sending a scenario service request comprising the service code identifier to the service platform, wherein the service platform queries service scenario information in a service code record associated with the service code identifier, and returns the service scenario information; and
sending, to the merchant terminal, the service scenario information returned by the service platform.

13. The service processing method according to claim 12, wherein the performing payment processing based on a payment request submitted after a merchant terminal scans the service code comprises:
sending, to a payment platform, the payment request submitted by the merchant terminal when payment information matches the service scenario information, wherein the payment platform performs payment verification on the payment information in the payment request, and performs payment processing after verification succeeds.

14. The service processing method according to claim 13, wherein the payment verification comprises:
determining a payment scenario based on the payment information, and reading payment scenario information corresponding to the payment scenario in the service scenario information; and
performing permission verification on the payment request based on the payment scenario information and the payment information;
wherein the performing permission verification on the payment request based on the payment scenario information and the payment information comprises:
verifying whether a payment amount in the payment information is less than or equal to a scenario permission amount in the payment scenario information; and determining that verification succeeds in response to verifying that the payment amount in the payment information is less than or equal to the scenario permission amount in the payment scenario information.

15. The service processing method according to claim 1, wherein the sending the invoice application information to the merchant terminal comprises:
determining a payment scenario corresponding to the payment request based on payment information comprised in the payment request; and
extracting scenario invoice application information corresponding to the payment scenario from the invoice application information, and sending the scenario invoice application information to the merchant terminal.

16. A service processing apparatus, comprising:
a request generation module, configured to generate a service code creation request comprising service access information and a user identity identifier based on an access instruction of a user for a target service, and send the service code creation request to a service platform based on the access instruction;
a service code rendering module, configured to perform service code rendering based on service code information returned after the service platform performs service code creation, and send a rendered service code corresponding to the access instruction to the user;
a payment processing module, configured to perform payment processing based on a payment request submitted after a merchant terminal scans the service code, and read invoice application information associated with a service code identifier comprised in the payment request after payment succeeds; and
an information delivery module, configured to deliver the invoice application information to the merchant terminal to perform invoice issuance.

17. A service processing device, comprising a processor and a memory configured to store computer-executable instructions, wherein when the computer-executable instructions are executed, the processor is enabled to:
generate a service code creation request comprising service access information and a user identity identifier based on an access instruction of a user for a target service, and send the service code creation request to a service platform based on the access instruction;
perform service code rendering based on service code information returned after the service platform performs service code creation, and send a rendered service code corresponding to the access instruction to the user;
perform payment processing based on a payment request submitted after a merchant terminal scans the service code, and read invoice application information associated with a service code identifier comprised in the payment request after payment succeeds; and
deliver the invoice application information to the merchant terminal to perform invoice issuance.

18. A storage medium, configured to store computer-executable instructions, wherein when the computer-executable instructions are executed by a processor, the following procedure is implemented:
generating a service code creation request comprising service access information and a user identity identifier based on an access instruction of a user for a target service, and sending the service code creation request to a service platform based on the access instruction;
performing service code rendering based on service code information returned after the service platform performs service code creation, and sending a rendered service code corresponding to the access instruction to the user;
performing payment processing based on a payment request submitted after a merchant terminal scans the service code, and reading invoice application information associated with a service code identifier comprised in the payment request after payment succeeds; and
delivering the invoice application information to the merchant terminal to perform invoice issuance.
